# Europäisches Patentamt

# European Patent Office

# Office européen des brevets

(19)

(11) Veröffentlichungsnummer: **0 131 172**
**B1**

(12) **EUROPÄISCHE PATENTSCHRIFT**

(45) Veröffentlichungstag der Patentschrift:
**20.05.87**

(51) Int. Cl.⁴: **F 16 B 12/44,** F 16 B 2/24

(21) Anmeldenummer: **84106907.3**

(22) Anmeldetag: **16.06.84**

(54) **Verbinder für Holzteile.**

(30) Priorität: **28.06.83 DE 3323192**

(43) Veröffentlichungstag der Anmeldung:
**16.01.85 Patentblatt 85/3**

(45) Bekanntmachung des Hinweises auf die Patenterteilung:
**20.05.87 Patentblatt 87/21**

(84) Benannte Vertragsstaaten:
**AT BE CH DE FR GB IT LI LU NL SE**

(56) Entgegenhaltungen:
**DE-A-1 929 325**
**DE-A-2 737 025**
**DE-C-356 781**
**US-A-4 259 767**

(73) Patentinhaber: **ALNO - Möbelwerke GmbH & Co.
KG, Heiligenberger Strasse 47, D-7798 Pfullendorf
(DE)**

(72) Erfinder: **Graf, Erhard, Rosenhag 13, D-7770
Überlingen (DE)**
Erfinder: **Schneider, Johannes, Pappelweg 25,
D-7947 Mengen (DE)**

(74) Vertreter: **Vogl, Leo, Dipl.- Ing., Blumenweg 4,
D-8501 Feucht (DE)**

LIBER, STOCKHOLM 1987

## Beschreibung

Die Erfindung betrifft einen als U-förmigen Bügel ausgebildeten, aus federelastischem Material bestehenden Verbinder für winklig aufeinanderstoßende, leistenförmige Holzteile mit in Öffnungen der Holzteile eingreifenden Schenkeln.

Es sind derartige Gesimsverbinder bekannt, bei denen die schenkelförmigen Teile mit abgewinkelten Zapfen in Öffnungen der Holzteile greifen. Die beiden Schenkel des U-förmigen Bügels stehen unter Vorspannung, so daß die abgewinkelten Zapfen gegeneinander gedrückt werden. Die Vorspannung wird entweder durch parallel verlaufende Schenkelteile erzeugt, oder durch Überkreuzen der beiden Schenkel. Es ist auch möglich, durch eine die Schenkel umgreifende Klammer die beiden in die Öffnungen der Holzteile greifenden Zapfen gegeneinander zu drücken (DE-A- 32 20 627.5).

Bei diesen bekannten Verbindern ist es erforderlich, dem Verbinder eine Vorspannung zu geben.

Es sind weiterhin U-förmige Verbinder bekannt (Prospekt der Fa. Hagenhenrich), die aus einem U-förmigen starren Blechstanzteil bestehen. Die beiden U-Schenkel sind keilförmig ausgebildet und an der Innenseite mit einer widerhakenartigen Verzahnung versehen. Das die beiden Schenkel verbindende Querteil ist außerdem leicht abgewinkelt. Beim Einschlagen des Verbinders in die Öffnungen der Holzteile werden durch die keilförmigen Schenkel die Holzteile in der Gehrungsstelle aufeinandergepreßt. Die Abwinklung des Querteiles ermöglicht eine geringe Aufweitung. Durch die keilförmige, mit Widerhaken versehene Ausbildung der Schenkel ist es nicht möglich, den Verbinder ohne Beschädigung der Holzteile zu entfernen und erneut in die Öffnungen der Holzteile einzusetzen.

Aus der DE-C-356 781 ist eine U-förmige, in Holzteile einzutreibende Befestigungsklammer bekannt, deren Schenkel leicht gegeneinander geneigt und dann nach außen geknickt sind. Durch diese Formgebung soll ein besonders fester Halt der Klammer gegen Herausziehen erreicht werden. Allein auf Grund der entgegengesetzten Aufgabenstellung gibt diese Befestigungsklammer keine Anregung für die erfindungsgemäße Lösung.

Der Erfindung liegt die Aufgabe zugrunde, einen Verbinder der eingangs genannten Art zu schaffen, der einfach ausgebildet ist und dessen Vorspannung beim Eindrücken der Schenkel in die Öffnungen erzeugt wird. Außerdem soll er ohne Zerstörung der Öffnungen der Holzteile herausziehbar und wieder einsetzbar sein.

Gemäß der Erfindung wird dies dadurch erreicht, daß die beiden Schenkel im spitzen Winkel gegeneinander gerichtet und an ihren Enden entgegengesetzt nach außen gebogen sind.

Durch die erfindungsgemäße Ausbildung wird erreicht, daß die gegeneinander gerichteten Schenkel beim Eindrücken in die Öffnungen der Holzteile nach außen gebogen werden und durch ein Querteil eine Vorspannung gegeneinander erhalten. Die entgegengesetzt nach außen gebogenen Enden ermöglichen ein leichtes Einführen und Herausnehmen der Schenkel in die Öffnungen der Holzteile, ohne daß die Öffnungen beschädigt werden. Ferner werden durch die Wölbungen Maßtoleranzen des Lochabstandes ausgeglichen.

Zweckmäßigerweise wird das die beiden Schenkel verbindende Querteil geradlinig ausgebildet und mit den Schenkeln aus rundem Federstahl hergestellt.

Ein Ausführungsbeispiel der Erfindung ist in der nachfolgenden Beschreibung der beiliegenden Zeichnung erläutert. Es zeigen:
Fig. 1 den erfindungsgemäßen Verbinder vor.Einschub in die Öffnungen der Holzteile
Fig. 2 den erfindungsgemäßen Verbinder im eingeschobenen Zustand in die Öffnungen der Holzteile.

In der Zeichnung ist mit 1 das Querteil des als U-förmiger Bügel ausgebildeten Verbinders gezeigt. An dem Querteil sind die Schenkel 2 angeordnet, die im spitzen Winkel aufeinander zulaufen. Ihre Enden 3 sind entgegengesetzt nach außen gebogen. Die Enden werden in Öffnungen 4 der miteinander zu verbindenden leistenförmigen Holzteile 5 eingeschoben.

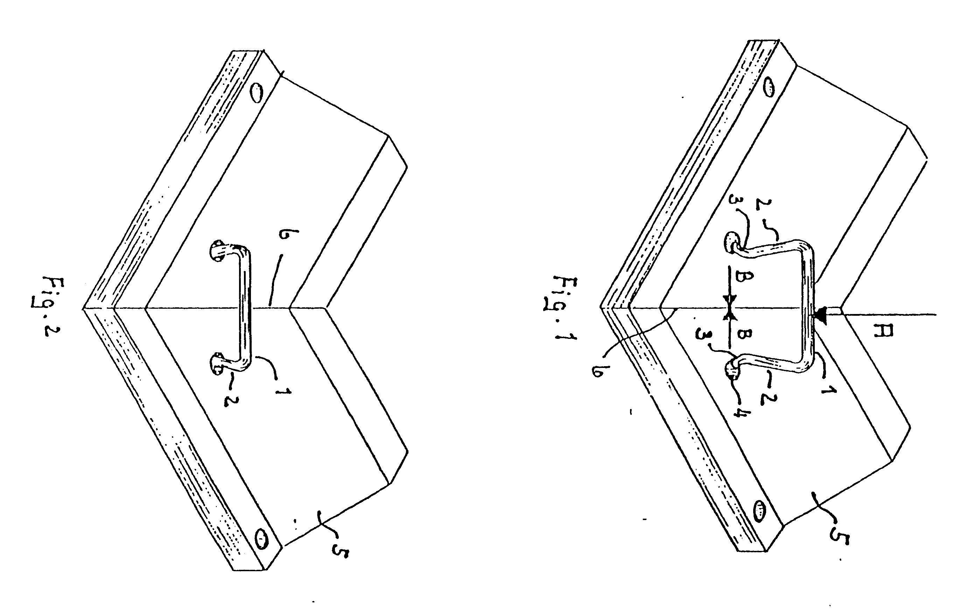

Fig. 2 zeigt den Verbinder im eingeschobenen Zustand. Die Schenkel 2 sind dabei zum größten Teil in die Öffnungen 4 eingeschoben. Die nach außen gebogenen Enden 3 liegen mit ihren Wölbungen an der Innenwandung der Öffnung 4 an, an der sie beim Einschieben und Herausnehmen leicht gleiten.

Wie in Fig. 1 dargestellt, erfolgt das Eindrücken des U-förmigen Bügels durch Druck auf den geradlinigen Querteil 1 in Richtung des Pfeiles A. Die Schenkel 2 werden durch die gewölbten Enden nach außen gedrückt, so daß durch das geradlinige Querteil 1 eine Vorspannung der Schenkel in Richtung der Pfeile B erzeugt wird. Durch diese Vorspannung werden die holzförmigen Teile 5 an der Gehrungsstelle 6 mit ihren Flächen aufeinandergepreßt.

Der als U-förmige Bügel ausgebildete Verbinder wird zweckmäßigerweise aus rundem Federstahl hergestellt, damit die Schenkel 2 mit den Wölbungen 3 leicht an der Innenwandung der Öffnungen 4 gleiten. Durch die Wölbungen 3 werden auch Maßtoleranzen ausgeglichen.

## Patentansprüche

1. Als U-förmiger Bügel ausgebildeter, aus federelastischem Material bestehender Verbinder für winklig aufeinanderstoßende, leistenförmige Holzteile, mit in Öffnungen der Holzteile eingreifenden Schenkeln, dadurch gekennzeichnet, daß die beiden Schenkel (2) im

spitzen Winkel gegeneinander gerichtet und an ihren Enden (3) entgegengesetzt nach außen gebogen sind.

2. Verbinder nach Anspruch 1, dadurch gekennzeichnet, daß die beiden Schenkel (2) durch ein geradliniges Querteil (1) miteinander verbunden sind.

3. Verbinder nach Anspruch 1 oder 2, dadurch gekennzeichnet, daß der U-förmige Bügel aus rundem Federstahl besteht.

## Claims

1. A connector which is designed in the form of a U-shaped strap or stirrup consisting of a resiliently elastic material and serving to join angularly abutting strip- or ledge-shaped wooden parts or elements, said connector comprising legs which engage into apertures of said wooden parts or elements, characterized in that said two legs (2) are directed towards each other at an acute angle and that their respective ends (3) are outwardly bent in the opposite direction.

2. A connector according to claim 1, characterized in that the two legs (2) are connected with each other by a rectilinear crosspiece (1)

3. A connector according to claim 1 or 2, characterized in that said U-shaped strap or stirrup consists of round spring steel.

## Revendications

1. Raccord constitué en matière élastique à ressort réalisé sous la forme d'un étrier en U pour des éléments en bois, en forme de listeaux, venant en butée l'un sur l'autre angulairement, avec des branches s'engageant dans des ouvertures des éléments en bois, caractérisé en ce que les deux branches (2) sont orientées l'une vers l'autre en formant un angle aigu et sont repliées à leurs extrémités (3) en sens opposé vers l'extérieur.

2. Raccord selon la revendication 1, caractérisé en ce que les deux branches (2) sont reliées l'une à l'autre par une partie transversale (1) rectiligne.

3. Raccord selon la revendication 1 ou 2, caractérisé en ce que l'étrier en forme de U est réalisé en acier à ressorts rond.

Fig. 1

Fig. 2

1